# EUROPEAN PATENT SPECIFICATION

(11) **EP 1 878 340 B1**
(45) Date of publication and mention of the grant of the patent: **08.08.2012**
(21) Application number: 07075474.2
(22) Date of filing: 14.06.2007
(51) Int. Cl.: A01K 11/00, A01K 1/12

(54) **An installation for automatically milking an animal**
Installation zum automatischen Melken eines Tieres
Installation pour la traite automatique d'un animal

(30) Priority: 12.07.2006 NL 1032150
(43) Date of publication of application: 16.01.2008
(60) Divisional application: 12167660.5
(73) Proprietor: Maasland N.V., 3147 PA Maassluis (NL)
(72) Inventor: Van den Berg, Karel, 2971 BR Bleskensgraaf (NL)
(74) Representative: Corten, Maurice Jean F.M.

(56) References cited:
- EP-A1- 1 611 783
- EP-A2- 1 042 952
- EP-A2- 1 070 452
- WO-A1-00/18218
- WO-A1-96/01041
- WO-A1-99/25176
- DE-A1-102004 042 658

## Description

The invention relates to an installation for automatically milking an animal according to the preamble of claim 1.

Such an installation is known from DE10 2004 042 658. This document describes a milk separation device for a milking device. An identification device is provided for identifying an animal to be milked, connected to a computer with a memory for animal data. When the period between the moment of identification and the moment of treatment of the animal with a medicine is smaller than a specific waiting time, the milk will be separated. There is no disclosure how treatment data is inputted into the computer.

In an installation according to the preamble of claim 1 it is common practice that, in the case of an injection to be given, this takes place when the animal is being milked. At the place in question, or remotely, the animal number is inputted manually into the input device and it is also manually inputted that the milk obtained from the animal having this number has to be separated from now on. A drawback of the known installation is that it is easily possible to input a wrong number or to forget certain input actions. This may lead to non-separation of milk that is unfit for consumption. Therefore, the invention further aims at providing an installation according to the preamble of claim 6, which installation reduces the risk of mistakes.

This is achieved by an installation according to the preamble of claim 1, characterized in that the input device comprises a push or touch button for linking animal data in the memory by one single pushing movement, and that, by operating the input device, the animal recognition signal is automatically linkable in the memory with the animal data. By means of this installation it is possible, by operating one single input device, to link animal data in a simple and faultless manner with the identity of the animal that has just been treated or is going to be treated. In this case, the memory is designed as a register having for each individual animal associated memory locations in which animal data, i.e. data relating to the animal, can be stored.

The animal data preferably comprise data relating to the treatment of the animal with a medicine. In this manner it is automatically registered that a medicine has been administered. This is particularly practical for controlling authorities in order to be able to trace the origin of a particular contamination in animal or milk in case of calamities.

In a favourable embodiment, the installation comprises an animal recognition that is adapted to cooperate with a transponder that is attachable on/to the animal.

Owing to the fact that the input device comprises a push or touch button for linking animal data in the memory by one single pushing movement, there is created an input device that can easily be operated. By a pushing movement is also meant only touching the button. It is further advantageous if the installation comprises several push or touch buttons, each push or touch button being suitable for inputting animal data relating to an associated different treatment. By means of this embodiment it is possible to perform different treatments, each treatment requiring another associated modification of animal data in the memory. The push or touch button may also constitute part of a larger touch screen. Such a screen known per se may display, controlled by the computer program, information or a touch button according to user's wishes.

The installation preferably comprises a separation device for separating milk, the animal data relating to data by means of which the separation device is controllable. After an animal has been treated with a medicine, the milk obtained is often unfit for human consumption and has to be separated. It is then practical that this can take place automatically.

It is further advantageous if the installation comprises a marker that is capable of being activated by the input device. Marked animals can easily be retrieved in the herd. Automatic marking facilitates and accelerates the activities.

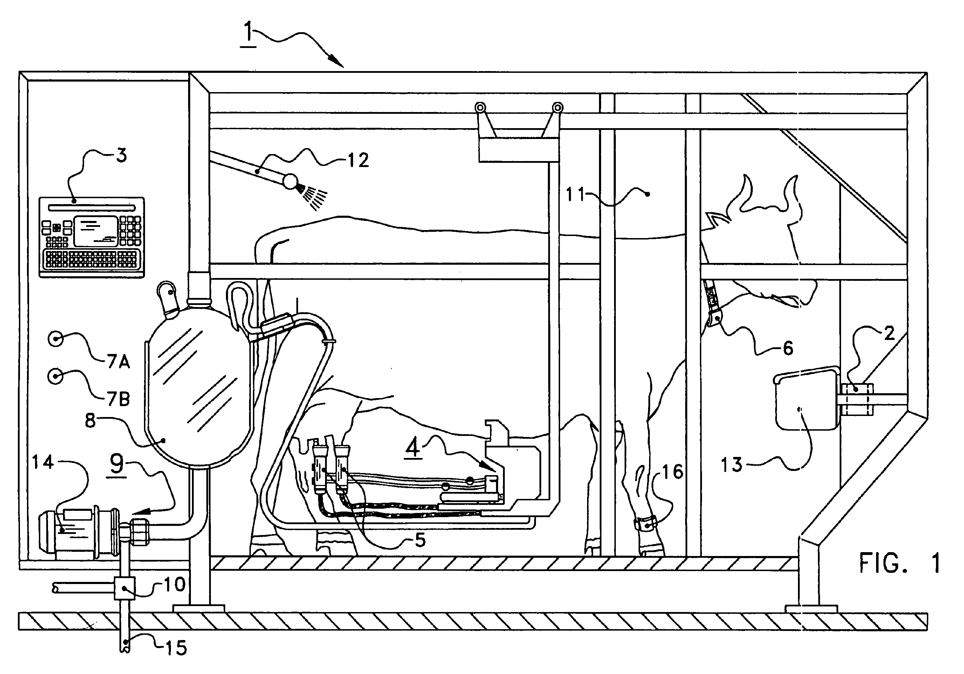

The invention will be explained hereinafter in further detail with reference to an embodiment shown in the drawing, in which Figure 1 is a side view of the installation according to the invention.

Figure 1 shows an installation for milking an animal with an animal recognition 2 for supplying an animal recognition signal representative of the identity of the animal, a computer 3 with a memory and an input device for inputting animal data relating to the animal into the memory, characterized in that, by operating the input device, the animal recognition signal is automatically linkable in the memory with the animal data relating to the treatment of the animal. The animal recognition signal is in the form of an animal number. The installation further comprises a box 1 for containing the animal and a robot arm 4 for automatically connecting teat cups 5 to the teats of the animal located in the box 1. Said robot arm 4 is movable in horizontal direction along a rail and is movable from a first longitudinal side of the box 1 to under the animal. Automatic connection of the teat cups 5 by means of the arm takes place in a manner known per se. In order to recognize the animal located in the box 1 the installation comprises an animal recognition 2 that is capable of cooperating with a transponder 6 around the neck of the animal. The animal recognition 2 may also be of another type, such as a device recognizing by means of image recognition, an iris scanner or a nose scanner. The input device comprises two push or touch buttons 7A, 7B suitable for inputting animal data relating to two associated different treatments. The installation further comprises a milk collecting vessel 8 in which the milk of one milking run is collected and which also serves for separating air. A separation device 9 for separating milk is disposed at the lower side of the milk collecting vessel 8. The separation device 9 comprises a three-way-valve 10 that is controllable by the computer 3 on the basis of animal data. The computer 3 further controls the different components and the course of the milking process. In order to make it possible to keep the animal in the box 1, the box 1 is provided with bars. These leave sufficient space to make it possible to treat the animal from outside the box 1, for example for giving an injection.

The box 1 comprises at the first longitudinal side a passage opening 11 for giving an operator access from the outside of the box 1 to the inside thereof and vice versa. Said passage opening 11 is constituted by two vertical bars and provides sufficient space for an operator, but is too narrow to let pass the animal to be milked. In a non-shown embodiment, the passage opening 11 is closable, for example by a shiftable or pivotable beam. Such a beam prevents the animal from putting its head through the passage opening 11.

The entrance and exit door for the animal are not shown. These are located at the other longitudinal side of the box 1. At this side there is also located a (non-shown) second passage opening 11. Owing to the fact that there is a passage opening at both longitudinal sides, it is possible for an operator to use the box as a passage to the animal accommodation.

The installation further comprises a marker 12 that is capable of being activated by the input device 7A, 7B. The marker 12 is designed as a sprayer in order to apply a colorant to the back of the animal. In order to distinguish which treatment has been performed, it is possible to apply several markers 12 with different colours or to spray a particular pattern according to the sort of treatment.

The mode of operation of the invention is as follows. An animal enters the box 1 voluntarily, or is led into the box 1 by an operator, for example by means of a cord around its head. In the latter case, the operator will leave the box 1 at the front side through the passage opening 11.

At the front side of the box 1, near the feed trough 13, there is disposed the animal recognition 2 that recognizes the animal via the transponder 6 and generates an animal recognition signal. In order to prevent animals located close to the installation from being disturbed by transponders 6, the animal recognition signal is only used by the computer 3 if the entrance and exit door are both completely closed. Furthermore, the animal recognition signal is only used by the computer 3 if during a particular minimum period of time the same identity is registered. If several identities are registered, an alarm will go off.

In the register of the identified animal it is indicated that the animal in question has to undergo a treatment. Subsequently, via the mobile telephone, the computer 3 draws the operator's attention to the fact that the animal in question is present in the box 1. Subsequently, the operator will treat the animal, for example by injecting it with an antibiotic. This takes place from the outside of the box 1 through the bars of the box 1.

In a non-shown embodiment, the installation comprises a medicine reader in the form of a bar code or chip code reader. In this case, the operator holds the packing of the medicine X against the medicine reader, after which the code on the packing is read and passed on to the computer 3. It is also possible that the computer 3 has released itself the medicine X via a so-called medicine chest. Such a chest and its mode of operation are described in patent application WO-A-0036568. In the latter case, the computer 3 assumes that the treatment takes place with the medicine X that has been released by the medicine chest. In a particular embodiment, release of the medicine is only possible if the bar code/chip code reader is activated by a so-called treatment tag 16. Said treatment tag 16 is detachably disposed on a leg of the animal and may be disposed by another person. In this manner it is possible to disconnect diagnosis and treatment from each other and also to make sure that a treatment has taken place. The operator detaches the treatment tag 16, scans it with the bar code or chip code reader, after which the medicine chest releases the allocated medicine.

When the treatment has been performed, the operator presses the push or touch button 'antibiotics' 7A. The animal data, i.e. 'treatment with medicine X', is now automatically linked with the animal number and stored in the memory of the computer 3. Besides, the point of time of pressing the push or touch button, the identity of the operator, if known, and, in the case of several boxes, the box number, are stored as well. In the memory of the computer 3 'treatment with medicine X' is linked with '3-day separation'. The computer 3 will separate from now on the milk obtained from this animal during the next three days. Pressing the push or touch button 7A, 7B has also activated the marker 12 that sprays a colorant on the back. Subsequently, the animal is automatically milked in a known manner. The robot arm 4 detects the teats, connects the teat cups 5 and through the milking vacuum the milk is drawn from the udder and received in the milk collecting vessel 8. After the milking has been finished, the computer 3 activates the separation device 9 on the basis of the action '3-day separation'. The three-way-valve 10 is controlled in such a way that the line from the pump 14 to the milk tank is closed and the line to the sewer 15 is open. Subsequently, the computer 3 controls the pump 14 and the milk collecting vessel 8 is emptied by pumping its contents to the sewer 15.

In a non-shown embodiment, the installation comprises a pivotable platform on which the animal is located at least during milking. Connection of the teat cups takes place by means of a mobile milking robot. Such a milking robot and such a pivotable platform are described in Dutch patent NL-1024522-C. In this case, the input device is provided on the mobile milking robot or on the pivotable platform in the vicinity of a milking parlour.

The invention is not limited to automatic milking and also applicable in a conventional milking installation in which the animals to be milked are arranged in rows. In that case, a milking parlour has to be considered as the box 1.

## Claims

1. An installation for milking an animal comprising an animal recognition (2) for supplying an animal recognition signal representative of the identity of the animal, a computer (3) with a memory and an input device for inputting animal data relating to the animal into the memory, **characterized in that**, the input device comprises a push or touch button (7A, 7B) for linking animal data in the memory by one single pushing movement, and that by operating the input device, the animal recognition signal is automatically linkable in the memory with the animal data relating to the treatment of the animal.

2. An installation as claimed in claim 1, **characterized in that** the animal data comprise data relating to the treatment of the animal with a medicine.

3. An installation as claimed in claim 1 or 2, **characterized in that** the installation comprises an animal recognition (2) that is adapted to cooperate with a transponder (6) that is attachable on/to the animal.

4. An installation as claimed in any one of claims 1 to 3, **characterized in that** the installation comprises several push or touch buttons (7A, 7B), each push or touch button (7A, 7B) being suitable for inputting animal data relating to an assiciated different treatment.

5. An installation as claimed in any one of claims 1 to 4, **characterized in that** the installation comprises a separation device (9) for separating milk, which separation device (9) is controllable by the animal data.

6. An installation as claimed in any one of claims 1 to 5, **characterized in that** the installation comprises a marker (12) that is capable of being activated by the input device.

7. An installation as claimed in any one of claims 1 to 6, **characterized in that** the installation comprises a box (1) for containing an animal to be milked.

8. An installation as claimed in any one of claims 1 to 7, **characterized in that** the installation comprises a robot arm (4) for connecting teat cups to the teats of the animal.

9. An installation as claimed in any one of claims 1 to 8, **characterized in that** the installation comprises a pivotable platform on which the animal is located at least during milking.

## Patentansprüche

1. Anlage zum Melken eines Tieres, umfassend eine Tiererkennung (2) zum Liefern eines Tiererkennungssignals, welches die Identität des Tieres bezeichnet, einen Computer (3) mit einem Speicher und einer Eingabevorrichtung zum Eingeben von Tierdaten, welche sich auf das Tier beziehen, in den Speicher,
**dadurch gekennzeichnet, dass** die Eingabevorrichtung eine Druck- oder Sensortaste (7A, 7B) zum Verbinden von Tierdaten im Speicher durch eine einzelne Druckbewegung umfasst und dass durch Betätigen der Eingabevorrichtung das Tiererkennungssignal automatisch im Speicher mit den Tierdaten, welche sich auf die Behandlung des Tieres beziehen, verbindbar ist.

2. Anlage nach Anspruch 1,
**dadurch gekennzeichnet, dass** die Tierdaten Daten umfassen, welche sich auf die Behandlung des Tieres mit einem Medikament beziehen.

3. Anlage nach Anspruch 1 oder 2,
**dadurch gekennzeichnet, dass** die Anlage eine Tiererkennung (2) umfasst, welche so ausgelegt ist, um mit einem Transponder (6) zusammenzuwirken, der auf dem Tier oder direkt am Tier anbringbar ist.

4. Anlage nach einem der Ansprüche 1 bis 3,
**dadurch gekennzeichnet, dass** die Anlage mehrere Druck- oder Sensortasten (7A, 7B) umfasst, wobei jede Druck- oder Sensortaste (7A, 7B) geeignet ist, um Tierdaten, welche sich auf eine zugeordnete unterschiedliche Behandlung beziehen, einzugeben.

5. Anlage nach einem der Ansprüche 1 bis 4,
**dadurch gekennzeichnet, dass** die Anlage eine Abscheidevorrichtung (9) zum Abscheiden von Milch umfasst, wobei die Abscheidevorrichtung (9) durch die Tierdaten steuerbar ist.

6. Anlage nach einem der Ansprüche 1 bis 5,
**dadurch gekennzeichnet, dass** die Anlage eine Markervorrichtung (12) umfasst, welche in der Lage ist, durch die Eingabevorrichtung aktiviert zu werden.

7. Anlage nach einem der Ansprüche 1 bis 6,
**dadurch gekennzeichnet, dass** die Anlage eine Stallzelle (1) zum Aufnehmen eines Tieres, das gemolken werden soll, umfasst.

8. Anlage nach einem der Ansprüche 1 bis 7,
**dadurch gekennzeichnet, dass** die Anlage einen Roboterarm (4) zum Anschließen der Zitzenbecher an die Zitzen des Tieres umfasst.

9. Anlage nach einem der Ansprüche 1 bis 8,
**dadurch gekennzeichnet, dass** die Anlage eine drehbare Plattform umfasst, auf welcher sich das Tier wenigstens während des Melkens befindet.

## Revendications

1. Installation pour la traite d'un animal, comprenant un dispositif de reconnaissance d'animal (2) pour fournir un signal de reconnaissance d'animal représentatif de l'identité de l'animal, un ordinateur (3) avec une mémoire et un dispositif d'entrée pour entrer des données d'animal concernant l'animal dans la mémoire, **caractérisée en ce que** le dispositif d'entrée comprend un bouton-poussoir ou bouton tactile (7A, 7B) pour lier des données d'animal dans la mémoire par un mouvement de poussée unique, et que, en faisant fonctionner le dispositif d'entrée, le signal de reconnaissance d'animal peut être automatiquement lié dans la mémoire avec les données d'animal concernant le traitement de l'animal.

2. Installation selon la revendication 1, **caractérisée en ce que** les données d'animal comprennent des données concernant le traitement de l'animal avec un médicament.

3. Installation selon la revendication 1 ou 2, **caractérisée en ce que** l'installation comprend un dispositif de reconnaissance d'animal (2) qui est adapté pour coopérer avec un transpondeur (6) qui peut être fixé sur/à l'animal.

4. Installation selon l'une quelconque des revendications 1 à 3, **caractérisée en ce que** l'installation comprend plusieurs boutons-poussoirs ou boutons tactiles (7A, 7B), chaque bouton-poussoir ou bouton tactile (7A, 7B) étant approprié pour entrer des données d'animal concernant un traitement différent associé.

5. Installation selon l'une quelconque des revendications 1 à 4, **caractérisée en ce que** l'installation comprend un dispositif de séparation (9) pour séparer du lait, lequel dispositif de séparation (9) peut être commandé par les données d'animal.

6. Installation selon l'une quelconque des revendications 1 à 5, **caractérisée en ce que** l'installation comprend un marqueur (12) qui peut être activé par le dispositif d'entrée.

7. Installation selon l'une quelconque des revendications 1 à 6, **caractérisée en ce que** l'installation comprend un box (1) pour contenir un animal à traire.

8. Installation selon l'une quelconque des revendications 1 à 7, **caractérisée en ce que** l'installation comprend un bras robotisé (4) pour raccorder des gobelets trayeurs aux trayons de l'animal.

9. Installation selon l'une quelconque des revendications 1 à 8, **caractérisée en ce que** l'installation comprend une plateforme pivotante sur laquelle l'animal est positionné au moins durant la traite.
